(19) **Europäisches Patentamt**
**European Patent Office**
**Office européen des brevets**

(11) **EP 1 117 502 B2**

(12) **NEW EUROPEAN PATENT SPECIFICATION**

(45) Date of publication and mention
of the opposition decision:
**09.07.2008 Bulletin 2008/28**

(45) Mention of the grant of the patent:
**08.01.2003 Bulletin 2003/02**

(21) Application number: **99947706.0**

(22) Date of filing: **30.09.1999**

(51) Int Cl.:
**B23K 26/00** (2006.01)

(86) International application number:
**PCT/GB1999/003241**

(87) International publication number:
**WO 2000/020157 (13.04.2000 Gazette 2000/15)**

(54) **WELDING METHOD**

VERFAHREN ZUM SCHWEISSEN

PROCEDE DE SOUDAGE

(84) Designated Contracting States:
**AT BE CH CY DE DK ES FI FR GB GR IE IT LI LU MC NL PT SE**

(30) Priority: **01.10.1998 GB 9821375**

(43) Date of publication of application:
**25.07.2001 Bulletin 2001/30**

(73) Proprietor: **THE WELDING INSTITUTE**
**Great Abington,**
**Cambridge CB1 6AL (GB)**

(72) Inventors:
• **Jones, Ian Anthony**
**Hadstock,**
**Cambridge CB1 6NX (GB)**
• **Wise, Roger Jeremy**
**Newmarket (GB)**

(74) Representative: **Skone James, Robert Edmund**
**Gill Jennings & Every LLP**
**Broadgate House**
**7 Eldon Street**
**London EC2M 7LH (GB)**

(56) References cited:
**EP-A- 0 282 181**     **US-A- 4 606 859**

**Description**

The present invention relates to a method of forming a weld between two plastics workpieces, over a joint region.

Transmission laser welding is a technique which has been developed for welding together materials such as plastics. This is achieved by positioning two plastic members in contect, one of which is transparent, the other of which is opaque to visible light. The region of contact between the two plastic members is then exposed to a laser beam. The laser beam passes through the transparent plastic member and is absorbed by the second opaque plastic member. This causes the opaque plastic member to heat up causing the region of contact between the two plastic members to melt, thereby forming a weld. Examples are described in "Laser-transmission welding of PE-HD", Kunstoffe 87 (1997) 3, pp 348-350; Puetz H et al, "Laser welding offers array of assembly advantages", Modem Plastics International, September 1997; Haensch D et al, "Joining hard and soft plastics with a diode laser", Kunstoffe 88 (1998) 2, pp 210-212; and Jones I A. "Transmission laser welding of plastics", Bulletin of The Welding Institute, May/June 1998, and US-A-5893959 which is considered to represent the closest prior art over the invention.

US-A-5893959 describes a method of forming a weld between plastics workpieces. The method comprises exposing a joint region to incident laser radiation from a Nd:YAG laser having a wavelength outside the visible range so as to cause melting of the surface of one or both workpieces at the joint region, and allowing the melted material to cool thereby welding the workpieces together. The transmission coefficient of one workpiece and the absorbtion coefficient of the other workpiece being set by additives included in the workpieces such that the said one workpiece is at least partially transparent to the incident laser radiation and the said other workpiece is at least partially absorbent to the incident laser radiation.

Further the reflectivity of the workpieces is substantially identical for visible light rays, and the workpieces are impermeable for visible light rays.

DE-A-4432081 describes the welding of thermoplastic mouldings with high energy radiation, for example laser beams. One moulding is composed of a material which absorbs radiation well and the other moulding is composed of material which is at least partially transparent to radiation. The absorbtion of the radiation by the mouldings can be adjusted by means of different additives such as carbon black or nigrosine.

All these methods are limited by the need to provide at least one workpiece which is opaque to visible light.

In accordance with the present invention, we provide a method of forming a weld between plastics workpieces over a joint region, the method comprising exposing the Joint region to incident radiation having a wavelength outside the visible range so as to cause melting of the surface of one or both workpieces at the Joint region, and allowing the melted material to cool thereby welding the workpieces together, the method further comprising providing a radiation absorbing material at the joint region in one of the workpieces or between the workpieces which has an absorption band in the range 780nm - 1500nm matched to the wavelength of the incident radiation so as to absorb the incident radiation and generate heat for the melting process, the radiation absorbing material being visually transmissive so that the material does not substantially affect the appearance of the joint region or the workpieces in visible light.

Accordingly, we provide a method for welding plastics workpieces which can produce a visually transmissive weld. This is achieved by including visually transmissive material at the joint region which absorbs radiation outside the visible spectrum. The joint region is then exposed to radiation of this wavelength, causing the Joint region to heat up. This in turn causes the workpieces to melt such that a weld is formed between the two workpieces. If the workpieces and the joint region are themselves transmissive to visible radiation, the weld is also at least translucent to the naked eye.

The workpieces may be opaque and have similar or dissimilar colours and/or be transparent or translucent to visible light.

In some cases, the material absorbent to the radiation is included in one of the workpieces.

In other cases, two workpieces may be welded together with the material being sandwiched between the two workpieces. This then enables workpieces which do not include a suitable radiation absorbing material to be welded together.

The radiation absorbing materials, which are typically in the form of additive, may comprise dyes or pigments while the use of an additive allows standard plastics to be readily modified to allow welding by the new method. Dyes are preferred to pigments because the particulate nature of pigments means that light scattering occurs and light absorption efficiency is reduced. In addition the low molar absorption coefficients of pigments means that higher concentrations have to be used to produce a given heating effect, and apart from the cost disadvantages, this can lead to undesirable changes in the physical properties of the host, including the appearance of unwanted colour. In the remainder of this specification, dyes will be referred to although the alternative of pigments may also be appropriate.

In some cases the radiation absorbing material may have some residual colour that is visible when viewed as thick sections or with high concentrations of the material present. The strongest absorption will always be in invisible regions, however.

An ideal near-infrared dye for laser welding of transparent plastics would have the following attributes:

- A narrow, absorption band near 800nm, (or longer wavelengths, depending on the laser used) with a high molar absorption coefficient.
- Uttle if any absorption in the region 400-700nm.
- Good solubility in the host.
- Good stability towards the incorporation method used.
- Should not degrade to coloured by-products.

Examples of three dye types which can satisfy all of the above requirements are the cyanine dyes, the squarylium dyes, and the croconium dyes.

Each of the workpieces will be made of plastics material although these need not be the same. An example is PMMA perspex. The radiation absorbing material may be provided in just one of the workpieces or in an insert to be placed between the workpieces.

Near infrared absorber dyes have the properties of absorbing light in the region beyond 780nm with high efficiency. That is, they have high extinction coefficients at one or many wavelengths in that spectral region. When this light is absorbed whether it be from a laser source or an incoherent light source, the molecules dissipate the absorbed energy principally as heat via vibronic relaxations, and this heat is localised to the dye molecules and to their immediate host environment. In the case where the host is a polymer (most thermoplastics and some highly crosslinked polymers as well), a melting occurs at the surface where the dye and polymer are. If a clear polymer (i.e., one that does not absorb NIR radiation but which may simultaneously be water white or coloured) is adjacent to this surface, the melting will cause a weld to occur.

Thus, in order to have the weld occur, the dye must be absent from the front plastic entity allowing the laser light to pass through it unabsorbed and must be localised at least at the surface of the other plastic entity or at the interface between the two plastic pieces. In this sense, the lamina of dye is essentially behaving as an optical focal element for the laser light, absorbing it very efficiently in an extremely thin layer and converting the absorbed light to heat in that same layer. The laser light as well as other wavelengths of light are otherwise effectively transmitted by the remainder of the ensemble which lies in front of this laminar surface as well as behind this surface (an exception to the latter is when the option is used in which one element to be welded has its bulk pervaded by the dye). The establishment of such a dye-laden laminar surface can be accomplished in several ways:

- The dye can be incorporated into a thin film which can be placed at the interface of the plastic pieces to be welded. The film substrate can be the same polymer(s) being welded but may also be a different polymer. Dye concentrations of approximately 0.02% on a film weight basis are typically adequate but are a function of the particular dye used as well as the plastics being welded. A film thickness of approximately 25 $\mu$m is also typical. The advantage of using a film/tape containing the absorber dye is that the dye is needed in the film only where there is to be welding and its carrier is a solid allowing for ease of handling, storage, etc. Another advantage is that both plastic pieces can be of the same material and may notably be transparent plastic.
- The dye can be introduced into the bulk of the polymer of the letter of the two polymer pieces (latter in terms of which one the laser light encounters). Only that dye at or very near the surface is active at absorbing the laser light since the dyes are highly efficient NIR absorbers. The light absorption results in the weld as before but without the use of tape/film. The advantage is that there is no extra step in the welding manufacturing having to do with application of tape, etc.
- The surface of the latter plastic piece can be made, for instance, by having a dye laden film used as a mould insert in a moulding operation to generate the dye rich surface on the plastic piece.
- The surface of one of the substrates to be moulded may be imparted a surface application of the dye by dip coating, dye infusion, painting, spraying, printing, dry burnishing, paste application, etc. This is a low cost alternative in terms of dye used and offers flexibility in that only selected areas can be treated.
- The material to be welded can be coextruded with polymer containing the dye, but this can restrict the approach to certain applications able to make use of the extruded form.
- A plastic piece can be overmoulded to provide a narrow strip, for example, to a selected area, but this encounters a higher moulding cost.

The radiation absorbing material could be exposed directly to the radiation and then the two pieces butted together (optionally under pressure) or more usually will be exposed through a workpiece. Typically, that workpiece will not include a radiation absorbing material so that heating is localised to the interface between the two workpieces.

A variety of conventional radiation sources may be used including both diode and Nd:YAG lasers. Focused infrared lamps could also be used.

Examples of methods according to the present invention will now be described with reference to the accompanying drawings, in which:-

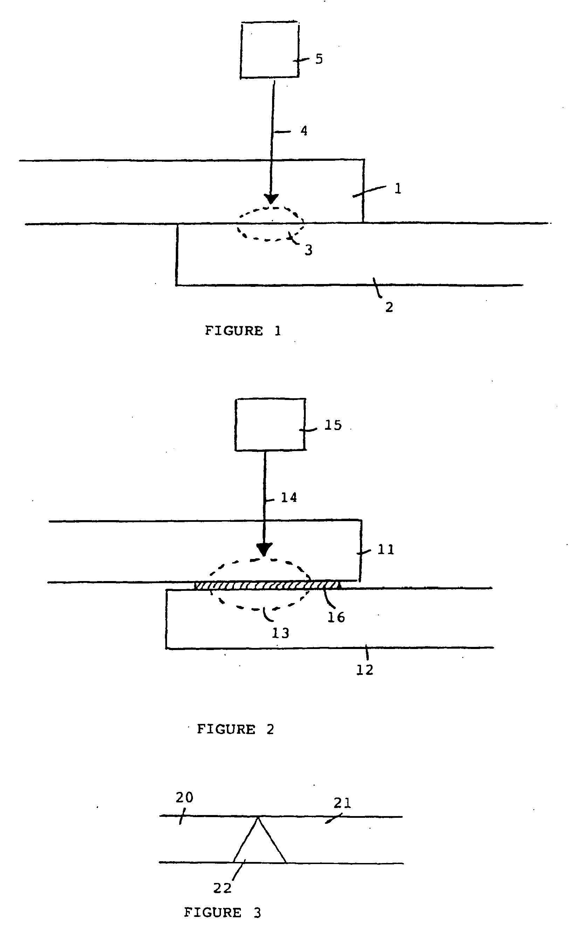

Figures 1 to 3 are schematic side views of three different welds.

Figure 1 shows a first plastics workpiece 1 and a second plastics workpiece 2 positioned in overlapping contact so as to define a joint region indicated at 3. The joint is welded by exposing the joint region 3 to a beam of non-visible radiation 4 from a source such as a laser 5, an i.r. lamp or the like.

The first plastics workpiece 1 is transmissive to radiation from the radiation beam 4 and may or may not transmit visible light. In this respect, transmissive means that the plastics workpiece 1 absorbs less than a predetermined portion of the incident radiation. Accordingly, the plastics workpiece 1 may be transparent or translucent to radiation in the visible spectrum, or may reflect such radiation but typically will not be totally absorbent (ie. black). Thus, the plastics workpiece 1 will be either colourless, clear with a coloured tint, or coloured.

The plastics workpiece 2 also may or may not be transmissive to radiation in the visible spectrum. However, In contrast to the plastics workpiece 1, it is necessary for the plastics workpiece 2 to be able to absorb the radiation beam 4. Accordingly, an additive is added to the plastics workpiece 2, the additive being absorptive of the radiation beam wavelength and being transmissive to radiation in the visible spectrum. Because only the joint region 3 will be exposed to the radiation beam 4, the additive may be provided only in the part of the plastics workpiece 2 which is to form the joint region, or alternatively it may be provided throughout the entire plastics workpiece 2.

The radiation beam 4 has a wavelength outside the visible spectrum but in a range which will be absorbed by the additive. This is infrared radiation having a wavelength between 780-1500nm. Accordingly, the laser 5 may be an Nd:YAG laser, or a diode laser.

When the joint region 3 is exposed to the radiation beam 4, the additive will absorb the radiation. This causes the additive to heat up melting the plastics workpieces 1,2 in the joint region 3, whereby on cooling the workpieces weld together. When the weld is formed, because the materials at the weld are transmissive to radiation in the visible spectrum, the weld itself will make little or no change to the visible appearance of the component. Welding occurs as a result of the heat generated giving melting of the plastic material up to a depth of typically 0.2mm. Where compatible material is in good contact interdiffusion of molecules and hence welding will occur. The heat generation at the weld interface is controlled by the absorption coefficient of the dye layer, and the processing parameters. The main parameters are laser power, which is typically between 10W and 500W, the welding speed (typically 5-200mm/sec) and the spot size of the laser beam (0.5-10mm wide). Processing can also be carried out with a fixed laser array, which would irradiate the joint area for a defined time.

A second embodiment of the present invention is shown in Figure 2. in Figure 2, there is provided a first plastics workpiece 11 and a second plastics workpiece 12. There is also provided a thin film of weld material 16 which is positioned between the first plastics workpiece 11 and the second plastics workpiece 12, so as to define a joint region 13. in order to weld the first and second plastics workpieces 11,12, the joint region 13 is exposed to the beam of radiation 14, from a source 15 such as a laser or the like.

As in the first embodiment of the present invention, the first and second plastics workpieces 11,12 may or may not be transmissive to radiation in the visible spectrum. However, in contrast to the first embodiment, it is not necessary for the second plastics workpiece 12 to absorb the radiation from the radiation beam 14.

However, the weld film 16 whilst being transmissive to radiation in the visible spectrum is absorptive to radiation from the radiation beam 14. Thus, as in the first embodiment of the present invention, when the joint region 13 is exposed to the radiation beam 14, the weld material 16 absorbs heat causing heating of the surrounding joint region 3. Consequently the plastics workpieces 11, 12 melt in the joint region 13 and on cooling form a weld. Again this is optically transmissive to radiation in the visible spectrum.

In its most basic form absorption in a translucent material follows an exponential link to thickness (ignoring the effects of reflection and scattering), i.e.

$$\text{fraction transmitted} = \exp(-at)$$

where a is the absorption coefficient and t is the thickness of the workpiece. The absorption coefficients for the translucent plastics we have measured range from $0.02\text{mm}^{-1}$ to $0.4\text{mm}^{-1}$ at 800-1100nm wavelength. Thus a useful range is anything less than about $1\text{mm}^{-1}$ for a translucent plastic. In a process of the form shown in Figure 2, the layer of dye had an absorption coefficient of about $5.4\text{mm}^{-1}$. Typically, therefore, the absorptive layer should have an absorption coefficient greater than about $3\text{mm}^{-1}$.

It will be realised that in either of the above examples, the plastics workpieces 1,2; 11,12 may be clamped together during the welding process to ensure the joint region is maintained in contact while the weld forms. Alternatively, the component with the absorptive material may be irradiated first and then the workpieces brought together.

A further weld configuration is shown in Figure 3 in which a pair of plastics workpieces 20,21 are welded together using a transparent insert 22 which is absorbent to laser light. The workpieces 20,21 in this case are not absorbent to laser light.

It will be appreciated that many further variations are possible such as butt welds and the like.

Typical absorbent additives can be selected from chemical groups such as metal phthalocyanine dyes, metalated azo dyes and metalated indoaniline dyes. Table 1 below provides a set of examples of matched sources and materials:

Table 1

| Light source | Wavelength range nm | Absorbing medium | Wavelength range nm |
|---|---|---|---|
| Infrared lamp | 700-2500 | Gentex dye A195<br>Gentex dye A101 | 780-1100<br>750-1100 |
| Nd:YAG laser | 1064 | Gentex dye A195 | 780-1100 |
| Diode laser, GaAs | 940-980 | Gentex dye A195 | 780-1100 |
| Diode laser, InGaAs | 790-860 | Gentex dye A187 | 821-858 |

Examples

**PMMA sheet welding:** Two clear sheets of polymethylmethacrylate approximately 3mm thick have been lap welded using the ClearWeld™ process with a Nd:YAG laser. A 10-15$\mu$m MMA film containing typically 0.01-0.1wt% infrared absorbing dye was placed at the interface. The two pieces were clamped together and welded with an applied power of 100W at speeds in the range 0.1-1.0m/min. The laser beam used was approximately 6mm in diameter and the film was 5mm wide. Tensile tests on these samples gave failure in the parent material adjacent to the weld with loads in the order of 50N/mm. The weld obtained had very little residual colour and was as clear or clearer than the parent PMMA.

**Polyurethane coated fabric welding:** Two white translucent pieces of polyurethane coated fabric approximately 0.15mm thick have been lap welded using the ClearWeld™ process. The infrared absorbing dye was applied from solution in acetone to the region to be welded between the lapped pieces. Typically 0.001-0.1$\mu$g/mm$^2$ of dye were applied to the fabric. The two pieces were clamped together and welded with an applied power of 100W at speeds in the range 0.5-2.0m/min. The laser beam used was approximately 6mm in diameter. The weld obtained had very little residual colour.

**PA/PTFE laminate fabric welding:** Two coloured opaque pieces of polyamide/polytetrafluoroethylene laminated fabric approximately 0.15mm thick have been lap welded using the ClearWeld™ process. The infrared absorbing dye was applied from solution in acetone to the region to be welded between the lapped pieces. Typically 0.001-0.1$\mu$g/mm$^2$ of dye were applied to the fabric. The two pieces were clamped together and welded with an applied power of 100W at speeds in the range 0.1-1.0m/min. The laser beam used was approximately 6mm in diameter. The weld region obtained had no apparent residual colour apart from that of the original fabric.

The welding technique has also been used for welding nylon based fabrics (laser stitching/sewing/seam-sealing/etc.) and thin films (PE, PEEK). In these cases the dye was dissolved in a suitable solvent and painted over the joint region with resultant deposition of dye both at the surface and infusion of dye very slightly into the substrate. It was allowed to dry prior to welding. Clearly, use of polymeric substrates such as polyester, polycarbonate, polystyrene, polysilicones, etc. either alone or in textile or other blends and numerous thermoplastic films are obvious extensions of this example. It should be noted that while maximum dye utility is attained when the dye is truly dissolved in the substrate (film or bulk or other carrier), suspensions of dye applied in these modes are also efficient for the welding applications described above.

**Claims**

1. A method of forming a weld between plastics workpieces (1,2) over a joint region (3), the method comprising:

exposing the joint region (3) to incident radiation (4) having a wavelength outside the visible range so as to cause melting of the surface of one or both workpieces (1,2) at the joint region (3), and allowing the melted material to cool thereby welding the workpieces together, the method further comprising providing a radiation absorbing material at the joint region (3) in one of the workpieces or between the workpieces (1,2) which has an absorption band in the range 780nm - 1500nm matched to the wavelength of the incident radiation so as to absorb the incident radiation and generate heat for the melting process, wherein the radiation absorbing material is visually transmissive so that the material does not substantially affect the appearance of the joint region or the workpieces in visible light.

2. A method according to claim 1, wherein the radiation absorbing material is sandwiched between two workpieces (1,2).

3. A method according to claim 1, wherein the radiation absorbing material is provided in at least one of the workpieces (1,2).

4. A method according to claim 1, wherein the radiation absorbing material is provided on the substrate by moulding the substrate in a mould with an insert formed by or including the radiation absorbent material.

5. A method according to claim 1, wherein the radiation absorbent material is provided as a coating on the substrate.

6. A method according to claim 1, wherein the radiation absorbent material is provided by coextruding the material with the substrate.

7. A method according to any of the preceding claims, wherein the radiation absorbing material is exposed to radiation prior to positioning the workpieces (1,2) together.

8. A method according to any of the preceding claims, wherein the radiation absorbing material is exposed to radiation through one of the workpieces (1,2).

9. A method according to any of the preceding claims, wherein the radiation absorbing material is a radiation absorbing dye.

10. A method according to any of claims 1 to 9, wherein the absorption band defines the range 780-1100nm.

11. A method according to any of claims 1 to 9, wherein the absorption band defines the range 820-860nm.

12. A method according to any of the preceding claims, wherein the absorption band does not include the range 400-700nm.

13. A method according to any of the preceding claims, wherein the wavelength of the incident radiation lies in the range 700-2500nm.

14. A method according to claim 13, wherein the wavelength of the incident radiation lies in the range 790-860nm.

15. A method according to claim 13, wherein the wavelength of the incident radiation lies in the range 940-980nm.

16. A method according to any of the preceding claims, wherein the radiation is a laser beam.

17. A method according to any of claims 1 to 15, wherein the workpieces comprise fabrics.

18. A method according to claim 17, wherein the fabrics are nylon-based fabrics.

19. A method according to claim 17, wherein the fabrics are polyurethane coated.

20. method according to claim 17, wherein the fabrics comprise polyamide/polytetrafluoroethylene laminated fabrics.

21. A method according to any of claims 1 to 15, wherein the workpieces comprise thin films such as polyester or PEEK.

22. The method according to claim 1, wherein the workpieces are made of thermoplastic.

23. The method according to claim 22, wherein the thermoplastic workpieces are textiles.

24. The method according to claim 22, wherein the workpieces are thermoplastic films.

**EP 1 117 502 B2**

**Patentansprüche**

1. Verfahren zur Formung einer Schweißstelle zwischen Kunststoff-Werkstücken (1, 2) in einem Verbindungsbereich, das die folgenden Schritte aufweist:

   Aussetzen des Verbindungsbereichs (3) einer einfallenden Strahlung (4), deren Wellenlänge außerhalb des sichtbaren Bereichs liegt, so dass ein Schmelzen der Oberfläche von einem oder beiden Werkstücken (1, 2) in dem Verbindungsbereich (3) auftritt, und Zulassen, dass das geschmolzene Material sich abkühlt, wodurch die Werkstücke miteinander verschweißt werden, wobei das Verfahren zusätzlich folgendes aufweist, ein strahlungsabsorbierendes Material in dem Verbindungsbereich (3) in einem der Werkstücke oder zwischen den Werkstücken (1, 2) vorzusehen, das ein Absorptionsband im Bereich von 780 nm - 1500 nm passend zu der Wellenlänge der einfallenden Strahlung aufweist, so dass die einfallende Strahlung absorbiert und Wärme für den Schmelzprozess erzeugt wird, wobei das strahlungsabsorbierende Material optisch durchlässig ist, so dass das Material nicht wesentlich die Erscheinung des Verbindungsbereichs oder der Werkstücke im sichtbaren Licht beeinflusst.

2. Verfahren nach Anspruch 1, bei dem das strahlungsabsorbierende Material zwischen zwei Werkstücke (1, 2) eingelegt ist.

3. Verfahren nach Anspruch 1, bei dem das strahlungsabsorbierende Material in mindestens einem der Werkstücke (1, 2) vorgesehen ist.

4. Verfahren nach Anspruch 1, bei dem das strahlungsabsorbierende Material auf dem Substrat durch Formen des Materials in einer Form mit einem Einsatz bereitgestellt ist, der aus dem strahlungsabsorbierenden Material geformt ist oder dieses einschließt.

5. Verfahren nach Anspruch 1, bei dem das strahlungsabsorbierende Material als eine Schicht auf dem Substrat bereitgestellt ist.

6. Verfahren nach Anspruch 1, bei dem das strahlungsabsorbierende Material durch Koextrusion des Materials mit dem Substrat bereitgestellt ist.

7. Verfahren nach einem der vorangehenden Ansprüche, bei dem das strahlungsabsorbierende Material der Strahlung vor dem Positionieren der Werkstücke (1, 2) aneinander ausgesetzt ist.

8. Verfahren nach einem der vorangehenden Ansprüche, bei dem das strahlungsabsorbierende Material der Strahlung durch eines der Werkstücke (1, 2) hindurch ausgesetzt ist.

9. Verfahren nach einem der vorangehenden Ansprüche, bei dem das strahlungsabsorbierende Material ein strahlungsabsorbierender Farbstoff ist.

10. Verfahren nach einem der Ansprüche 1 bis 9, bei dem das Absorptionsband einen Bereich von 780 - 1100 nm definiert.

11. Verfahren nach einem der Ansprüche 1 bis 9, bei dem das Absorptionsband einen Bereich von 820 - 860 nm definiert.

12. Verfahren nach einem der vorangehenden Ansprüche, bei dem das Absorptionsband nicht den Bereich von 400 - 700 nm einschließt.

13. Verfahren nach einem der vorangehenden Ansprüche, bei dem die Wellenlänge der einfallenden Strahlung im Bereich von 700 - 2500 nm liegt.

14. Verfahren nach Anspruch 13, bei dem die Wellenlänge der einfallenden Strahlung im Bereich von 790 - 860 nm liegt.

15. Verfahren nach Anspruch 13, bei dem die Wellenlänge der einfallenden Strahlung im Bereich von 940 - 980 nm liegt.

16. Verfahren nach einem der vorausgehenden Ansprüche, bei dem ein Laserstrahl als Strahlung vorgesehen ist.

17. Verfahren nach einem der Ansprüche 1 bis 15, bei dem die Werkstücke Stoffe enthalten.

**18.** Verfahren nach Anspruch 17, bei dem die Stoffe nylonbasierte Stoffe sind.

**19.** Verfahren nach Anspruch 17, bei dem die Stoffe polyurethanbeschichtet sind.

**20.** Verfahren nach Anspruch 17, bei dem die Stoffe polyamid/polytetrafluoräthylen-beschichtete Stoffe sind.

**21.** Verfahren nach einem der Ansprüche 1 bis 15, bei dem die Werkstücke einen dünnen Film wie beispielsweise Polyester oder PEEK aufweisen.

**22.** Verfahren wenigstens nach Anspruch 1, bei dem die Werkstücke aus einem Thermoplasten hergestellt sind.

**23.** Verfahren nach Anspruch 22, bei dem das thermoplastische Werkstück Textilien sind.

**24.** Verfahren nach Anspruch 22, bei dem die Werkstücke thermoplastische Filme sind.

**Revendications**

**1.** Procédé de formation d'une soudure entre des pièces (1, 2) en matière plastique sur une région de joint (3), le procédé comprenant :

l'exposition de la région de joint (3) à un rayonnement incident (4) ayant une longueur d'onde qui se trouve en dehors de la plage visible et destiné à provoquer la fusion de la surface de l'une au moins des deux pièces (1, 2) dans la région de joint (3), et le refroidissement naturel du matériau fondu afin que les pièces soient ainsi soudées mutuellement, le procédé comprenant en outre la disposition d'un matériau d'absorption du rayonnement dans la région de joint (3) dans l'une des pièces ou entre les pièces (1,2), ce matériau ayant une bande d'absorption dans la plage de 780 nm - 1500 nm adaptée à la longueur d'onde du rayonnement incident afin qu'il absorbe le rayonnement incident et crée de la chaleur pour l'opération de fusion, où le matériau absorbant le rayonnement est transparent visuellement de manière que le matériau n'affecte pratiquement pas l'aspect de la région du joint ou des pièces en lumière visible.

**2.** Procédé selon la revendication 1, dans lequel le matériau absorbant le rayonnement est disposé entre les deux pièces (1, 2).

**3.** Procédé selon la revendication 1, dans lequel le matériau absorbant le rayonnement est disposé dans l'une au moins des pièces (1, 2).

**4.** Procédé selon la revendication 1, dans lequel le matériau absorbant le rayonnement est disposé sur le substrat par moulage du substrat dans un moule avec un insert formé par le matériau absorbant le rayonnement ou contenant ce matériau.

**5.** Procédé selon la revendication 1, dans lequel le matériau absorbant le rayonnement est sous forme d'un revêtement formé sur le substrat.

**6.** Procédé selon la revendication 1, dans lequel le matériau absorbant le rayonnement est disposé par extrusion simultanée du matériau avec le substrat.

**7.** Procédé selon l'une quelconque des revendications précédentes, dans lequel le matériau absorbant le rayonnement est exposé au rayonnement avant le positionnement des pièces (1, 2) en coopération.

**8.** Procédé selon l'une quelconque des revendications précédentes, dans lequel le matériau absorbant le rayonnement est exposé au rayonnement à travers l'une des pièces (1, 2).

**9.** Procédé selon l'une quelconque des revendications précédentes, dans lequel le matériau absorbant le rayonnement est un colorant d'absorption du rayonnement.

**10.** Procédé selon l'une quelconque des revendications 1 à 9, dans lequel la bande d'absorption délimite la plage de 780 à 1 100 nm.

**11.** Procédé selon l'une quelconque des revendications 1 à 9, dans lequel la bande d'absorption délimite la plage de 820 à 860 nm.

**12.** Procédé selon l'une quelconque des revendications précédentes, dans lequel la bande d'absorption ne contient pas la plage de 400 à 700 nm.

**13.** Procédé selon l'une quelconque des revendications précédentes, dans lequel la longueur du rayonnement incident est comprise entre 700 et 2 500 nm.

**14.** Procédé selon la revendication 13, dans lequel la longueur d'onde du rayonnement incident est comprise dans la plage de 790 et 860 nm.

**15.** Procédé selon la revendication 13, dans lequel la longueur d'onde du rayonnement incident est comprise dans la plage de 940 à 980 nm.

**16.** Procédé selon l'une quelconque des revendications précédentes, dans lequel le rayonnement est un faisceau laser.

**17.** Procédé selon l'une quelconque des revendications 1 à 15, dans lequel les pièces sont des étoffes.

**18.** Procédé selon la revendication 17, dans lequel les étoffes sont des étoffes à base de "Nylon".

**19.** Procédé selon la revendication 17, dans lequel les étoffes sont revêtues de polyuréthane.

**20.** Procédé selon la revendication 17, dans lequel les étoffes comprennent des étoffes stratifiées de polyamide-polytétrafluoroéthylène.

**21.** Procédé selon l'une quelconque des revendications 1 à 15 dans lequel les pièces sont de minces films, par exemple de polyester ou de PEEK.

**22.** Procédé selon la revendication 1, dans lequel les pièces sont formées de matière thermoplastique.

**23.** Procédé selon la revendication 22, dans lequel les pièces de matière thermoplastique sont des textiles.

**24.** Procédé selon la revendication 22, dans lequel les pièces sont des films thermoplastiques.

FIGURE 1

FIGURE 2

FIGURE 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5893959 A

- DE 4432081 A

### Non-patent literature cited in the description

- Laser-transmission welding of PE-HD. *Kunstoffe,* 1997, vol. 87 (3), 348-350
- **PUETZ H et al.** Laser welding offers array of assembly advantages. *Modem Plastics International,* September 1997

- **HAENSCH D et al.** Joining hard and soft plastics with a diode laser. *Kunstoffe,* 1998, vol. 88 (2), 210-212
- **JONES I A.** Transmission laser welding of plastics. *Bulletin of The Welding Institute*